# EUROPEAN PATENT APPLICATION

(11) **EP 4 585 709 A1**
(43) Date of publication of application: **16.07.2025**
(21) Application number: 23863134.5
(22) Date of filing: 04.09.2023
(51) Int. Cl.: C22B 59/00, C22B 3/06, C22B 3/22, C22B 3/24, C22B 3/26, C22B 3/28, C22B 3/32, C22B 3/38, C22B 7/04

(54) **METHOD FOR RECOVERING SCANDIUM**

(30) Priority: 05.09.2022 JP 2022140961
(71) Applicant: NIPPON STEEL CORPORATION, Chiyoda-ku Tokyo 100-8071 (JP)
(72) Inventor: HIRATA, Junichi, Tokyo 100-8071 (JP); ISHIKAWA, Kyohei, Tokyo 100-8071 (JP); AIMOTO, Michihiro, Tokyo 100-8071 (JP); SHIMADA, Yusuke, Tokyo 100-8071 (JP); HOSHINO, Manabu, Tokyo 100-8071 (JP)
(74) Representative: Vossius & Partner Patentanwälte Rechtsanwälte mbB
(86) International application number: PCT/JP2023/032202
(87) International publication number: WO 2024/053596

(57) **Abstract**

A method of recovery of scandium, in recovery of scandium in iron and steel slag, for recovering scandium from the iron and steel slag while also roughly separating the scandium and other rare earth elements, comprising leaching out rare earth elements including scandium from the iron and steel slag several times in different ranges of pH and, furthermore, combining the leaching solution acquired using this method with a step for separating elements to recover the scandium with a high efficiency.

## Description

### FIELD

The present invention relates to a method of recovery of scandium (Sc), more particularly relates to a method of recovery of scandium for recovering scandium from blast furnace slag, steelmaking slag, or electric arc furnace slag while roughly separating the scandium and other rare earth elements (sometimes also referred to as "REE").

### BACKGROUND

Scandium is utilized as a material added to high strength alloys, material for electrodes of fuel cells, and other numerous types of materials and is an element high in industrial value. Further, the regions in which scandium ore can be found are limited. The global supply is also small. Scandium is therefore high in rarity value. However, there has been the problem that the price of scandium has sharply fluctuated due to changes in the political situation. Therefore, establishment of a method for stable supply of a large amount of scandium is important for industrial development.

In this regard, the amount of production of ferrous metals accounts for the majority of the overall amount of production of metals. The amount of production of iron and steel slag produced as a byproduct is also extremely great. For example, in Japan, about 100,000,000 tons of crude steel is being produced annually. As a byproduct, blast furnace slag is being produced in 23,000,000 tons a year, steelmaking slag in 12,000,000 tons a year, and electric arc furnace slag in about 3,000,000 tons a year. The ferrous metal ore, coal, and limestone of the materials forming these iron and steel slag and iron scrap contain trace amounts of rare earth elements (including scandium). After the ironmaking process, iron and steel slag also contains them.

Various studies have been conducted up to now for efficiently obtaining scandium.

PTL 1 has as its object the efficient recovery of high grade scandium and proposes to use nickel oxide steel as a starting material, separating the nickel, aluminum, chromium, and scandium contained in that material, then processing the separated Sc eluate by the separation operations of extraction, back extraction, precipitation, drying, and roasting to obtain Sc oxide.

PTL 2 has as its object to separate and recover the precious metal elements and rare earth elements (including scandium) contained in fly ash and proposes to separate the precious metals by a first process and to separate the rare earth elements by a second process.

PTL 3 has as its object to recover rare earth elements (including scandium) from tin slag discharged from a tin refining process and proposes a method focused on separating the constituents other than rare earth metals contained tin slag, that is, radioactive substances, iron, aluminum, and other metals, and finally obtaining salts or oxides of the rare earth metals.

PTL 4 shows a method of recovering rare earth elements (including scandium) from iron and steel slag by magnetic separation and wet refining. The method of leaching out rare earth elements described in PTL 4 utilized a saline solution or chelating agent, 0.1 mol/L of hydrochloric acid or nitric acid, etc.

### [CITATIONS LIST]

### [PATENT LITERATURE]

[PTL 1] Japanese Patent No. 5652503
[PTL 2] Japanese Patent No. 6159731
[PTL 3] Japanese Patent No. 5825074
[PTL 4] Japanese Unexamined Patent Publication No. 2018-530673

### SUMMARY

### [TECHNICAL PROBLEM]

Iron and steel slag contains trace amounts of rare earth elements including scandium but the main constituents of iron and steel slag are silicon (Si), iron (Fe), aluminum (Al), magnesium (Mg), calcium (Ca), etc. A process able to separate the main constituent elements of these to recover the scandium has to be constructed.

In addition, rare earth elements, as explained in detail later, include 17 types of elements including scandium. There is demand to separate the scandium and the rare earth elements other than scandium. It is possible to utilize the differences in chemical properties of the individual rare earth elements to separate and refine the scandium. Streamlining the process of separation and refinement is extremely important from the viewpoint of management of industrial production, including costs.

That is, iron and steel slag contains the high industrial value scandium, but also contains rare earth elements other than Sc and the elements forming the main constituents of the slag. It is desirable to efficiently separate and recover just scandium from the iron and steel slag.

PTLs 1 to 3 relate to separation of rare earth elements (including scandium) but the starting material is not iron and steel slag. The materials which have been covered by these prior art and iron and steel slag differ in leaching properties with respect to acids and also the types and concentrations of the main constituent elements to be separated. Therefore, it has been difficult to utilize these prior art to efficiently recover the rare earth elements in iron and steel slag, in particular scandium.

Further, PTL 4 has as its object to separate not only rare earth elements (including scandium) but also metal salts other than rare earth elements etc. from iron and steel slag, but the specific process conditions cannot be said to be optimal for that objective. Specifically, in the process of leaching iron and steel slag, only "a saline solution or chelating agent and acid (0.1 mol/L of HCl or HNO₃)'' is used, but iron and steel slag has basicity. The extent of that basicity also changes, so there is the problem that with a fixed acid concentration (0.1 mol/L), the leaching efficiency greatly changes depending on the volume ratio of the iron and steel slag and acid.

As explained above, it cannot be said that any sufficient method for industrially recovering scandium from iron and steel slag has been established. A more suitable method is being sought.

The present invention has as its object to provide a method of recovery of scandium for recovering scandium from iron and steel slag while also roughly separating the scandium and other rare earth elements.

### [SOLUTION TO PROBLEM]

The inventors engaged in repeated intensive research for solving the above-mentioned problem. As a result, they discovered that it is possible to leach out the scandium contained in iron and steel slag by acid while controlling the pH and that due to the differences in ranges of pH in which this leaching is performed, the elution behavior of scandium and rare earth elements other than scandium differ. They came up with the idea that it was possible to utilize this and leach out the scandium from iron and steel slag several times in different ranges of pH so as to recover the scandium from iron and steel slag while roughly separating the scandium and other rare earth elements and thereby completed the present invention. Further, in general, it is known that there are differences in the solubility of elements and that this also depends in the pH, but the fact that in leaching a iron and steel slag mainly comprised of CaO or SiO₂ by an acid, by control to a predetermined pH, there is a difference in the leach rate between rare earth elements has never been clarified.

Furthermore, it is possible to supply the scandium-containing leaching solution obtained at the leaching step to an extraction step comprised of one or both of a solid phase extraction step and solvent extraction step to separate the scandium from the iron, aluminum, magnesium, calcium, silicon, and other main constituents of the iron and steel slag and prepare a scandium-enriched solution, to prepare a precipitate of scandium in a precipitation step adding a precipitation agent to this, and to process this by a roasting step roasting this to obtain an oxide of scandium and recover high purity scandium.

That is, in the present invention, the following aspects are included:
(1) A method of recovery of scandium (Sc) from iron and steel slag produced by an ironmaking process, the method of recovery of scandium including
   a leaching step 1 of adjusting a pH of a leaching solution obtained by bringing a first acid into contact with the iron and steel slag to within a first pH range to obtain a first leaching solution,
   a first solid-liquid separation step of separating solids from the first leaching solution, and
   a leaching step 2 of adjusting a pH of a leaching solution obtained by bringing a second acid into contact with the solids separated by the first solid-liquid separation step to become within a second pH range lower than the leaching step 1 to obtain a second leaching solution,
   where the first acid and the second acid include nitric acid or sulfuric acid, the first pH range is 1.1 or more and less than 6.7, and the second pH range is -1.0 or more.
(2) The method of recovery of scandium according to (1), further comprising monitoring the pH of the first leaching solution and/or the second leaching solution while adding an acid or base to adjust the pH at the leaching step 1 and/or the leaching step 2.
(3) The method of recovery of scandium according to (1) or (2) wherein the second pH range in the leaching step 2 is -0.5 or more to 3.3 or less.
(4) The method of recovery of scandium according to any one of (1) to (3), using sulfuric acid as the first acid.
(5) The method of recovery of scandium according to (4), wherein the final pH of the leaching step 1 is 3.6 or more to less than 6.7.
(6) The method of recovery of scandium according to (4), wherein the final pH of the leaching step 1 is 3.6 or more to 5.3 or less.
(7) The method of recovery of scandium according to any one of (1) to (3), using nitric acid as the first acid.
(8) The method of recovery of scandium according to (7), wherein the final pH of the leaching step 1 is 3.4 or more to less than 6.0.
(9) The method of recovery of scandium according to (7), wherein the final pH of the leaching step 1 is 3.4 or more to 4.0 or less.
(10) The method of recovery of scandium according to any one of (1) to (9), further comprising
   a step of respectively adding a base or acid to the first leaching solution and/or the second leaching solution to adjust the pH and obtain a first pH-adjusted leaching solution and/or a second pH-adjusted leaching solution and
   an extraction step of processing the first pH-adjusted leaching solution and/or the second pH-adjusted leaching solution respectively by one or both of solvent extraction and solid phase extraction to obtain a first element-enriched solution and/or second element-enriched solution.
(11) The method of recovery of scandium according to (10), further comprising a precipitation step of respectively adding a precipitation agent to the first element-enriched solution and/or the second element-enriched solution to obtain a first precipitate and/or second precipitate.
(12) The method of recovery of scandium according to (11), further comprising a roasting step of respectively roasting the first precipitate and/or the second precipitate to obtain a first oxide and/or second oxide.
(13) The method of recovery of scandium according to (12), further comprising a drying step of respectively drying the first precipitate and/or the second precipitate.
(14) The method of recovery of scandium according to any one of (10) to (13), where the solvent extraction agent used in the extraction step is any of an amine, organic phosphoric acid, and carboxylic acid.
(15) The method of recovery of scandium according to any one of (10) to (14), where the solid phase extraction agent used in the extraction step is a resin having iminodiacetic acid as a functional group.
(16) The method of recovery of scandium according to any one of (10) to (15), where the precipitation agent used in the precipitation step is any of oxalic acid, carboxylic acid, tartaric acid, and a base.
(17) The method of recovery of scandium according to any one of (1) to (16), where the iron and steel slag is blast furnace slag.
(18) The method of recovery of scandium according to any one of (1) to (17), where the second leaching solution has scandium enriched more than the rare earth elements other than scandium.

### [ADVANTAGEOUS EFFECTS OF INVENTION]

According to the present invention, a method of recovery of scandium enabling recovery of scandium from iron and steel slag while roughly separating the scandium and other rare earth elements is provided. By controlling the pH in a plurality of leaching steps, it is possible to control different rare earth elements (scandium and other rare earth elements) to be leached out, so it becomes possible to lighten the load in a refining step following the leaching steps. Furthermore, by selecting the pH's of the leaching solutions from specific ranges, it is possible to raise the recovery rate of scandium from the iron and steel slag and/or the rough separation rate of scandium and other rare earth elements (refining rate).

### BRIEF DESCRIPTION OF DRAWINGS

FIG. 1 is a flow chart for explaining one example of a method of recovery of rare earth elements.
FIG. 2 is a flow chart for explaining one example of a solid phase extraction step.
FIG. 3 is a view showing one example of relationships of pHs of leaching solutions and leach rates of rare earth elements.
FIG. 4 is a view showing a distribution of particle size of iron and steel slag used in the examples.
FIG. 5 is a view schematically showing leaching steps of examples and comparative examples.
FIG. 6 is a view showing the procedure of a method of confirmation of the effect in separation of scandium and other rare earth elements.

### DESCRIPTION OF EMBODIMENTS

Below, a specific embodiment of the present invention (below, referred to as "the present embodiment") will be explained in detail while referring to the drawings, but the present invention is not limited to the following embodiment in any way. Suitable changes can be made in working the present invention to an extent not changing its gist.

There are several definitions of the elements included in the term "rare earth elements", but the term rare earth elements shown in the present disclosure is defined as the group of elements including the total 17 elements of the lanthanides (Ln) comprised of lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu) plus yttrium (Y) and scandium (Sc).

The "iron and steel slag" shown in this disclosure is defined as a term including blast furnace slag produced in the pig iron making step, steelmaking slag produced in the steelmaking step, and electric arc furnace slag produced in an electric arc furnace.

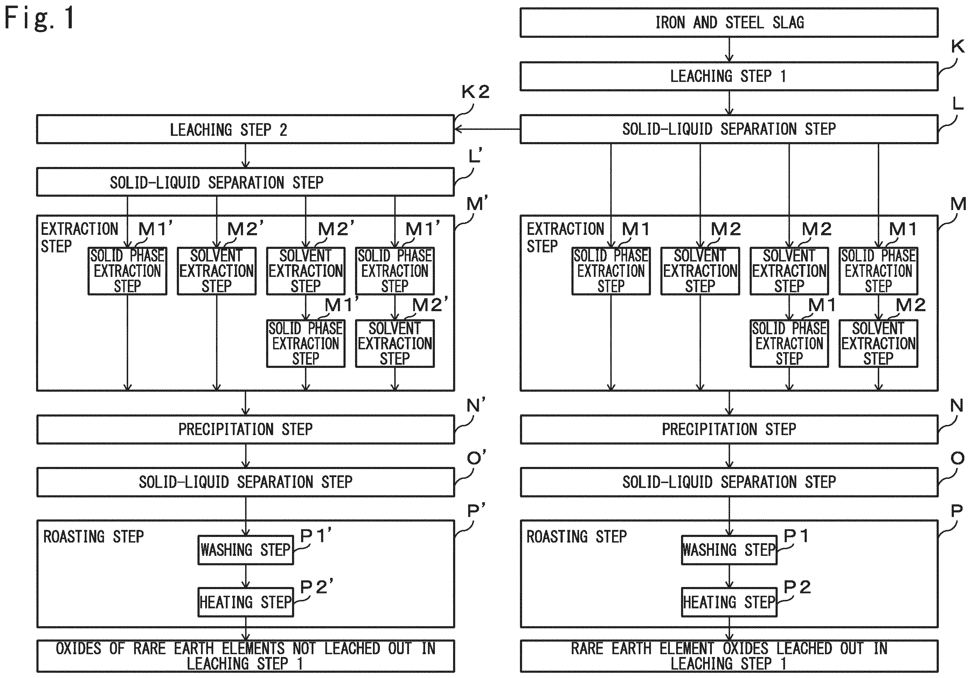

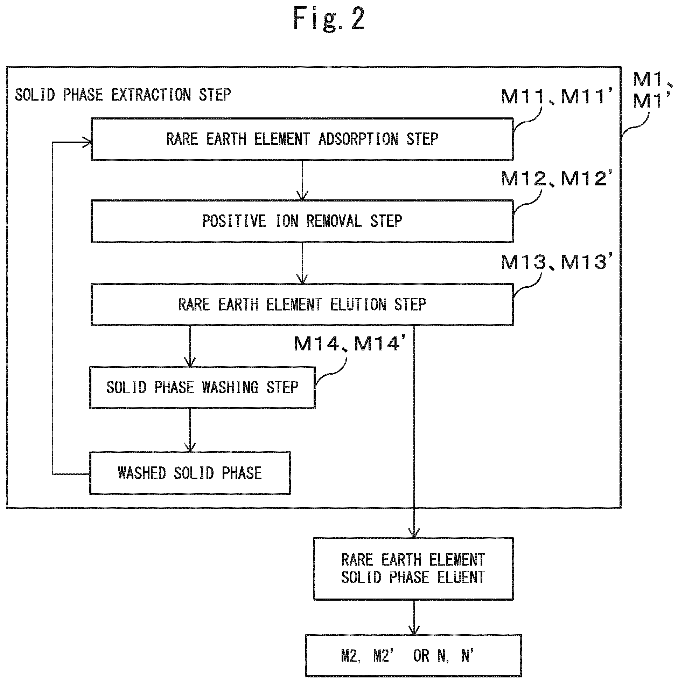

FIG. 1 and FIG. 2 are flow charts for explaining an illustrative method of recovery of scandium. The method of recovery of scandium leaches a iron and steel slag by sulfuric acid, nitric acid, hydrochloric acid, or other acid and introduces the obtained leaching solutions to refining steps to separate the aluminum, magnesium, calcium, silicon, and other elements mainly comprising the iron and steel slag and the rare earth elements other than scandium to recover the scandium.

A first feature of the present invention is leaching out the scandium from the iron and steel slag several times by different ranges of pH so as to recover the scandium from the iron and steel slag while roughly separating the scandium and other rare earth elements. Typically, at the leaching step 1, an acid is brought into contact with the iron and steel slag and the pH of the obtained leaching solution is controlled to thereby leach out at least part of the rare earth elements (mainly rare earth elements other than scandium). At the leaching step 2, an acid is brought into contact with the solids (residue) produced at the leaching step 1 and the pH of the obtained leaching solution is controlled to within a pH range different from the leaching step 1 (pH lower than the leaching step 1) to thereby leach out rare earth elements (mainly scandium) different from those leached out at the leaching step 1. Due to this, it is possible to recover scandium while roughly separating the scandium and other rare earth elements. Note that, here, "is mainly leached out" means that either one of the scandium and other rare earth elements is leached out by a higher leach rate than the other.

While not an essential aspect, a second feature of the present invention is that the elements in the leaching solutions obtained at the leaching step 1 and the leaching step 2 (typically scandium and other rare earth elements) are respectively refined at extraction steps M, M' including one or both of solid phase extraction steps M1, M1' and solvent extraction steps M2, M2'.

By using the method of the present invention, it is possible to leach out scandium and other rare earth elements from the iron and steel slag. Therefore, it is possible to recover the scandium and other rare earth elements in the iron and steel slag and possible to recover high purity scandium and other rare earth elements even from materials like iron and steel slag containing large amounts of impurities. Further, in the leaching step 1 and the leaching step 2, it is possible to simultaneously roughly separate the scandium and other rare earth elements. Due to this, it is possible to lighten the load of the refining steps and recover rare earth elements at low cost. In particular, it is possible to roughly separate Sc, which is high in industrial value even among rare earth elements, at the initial stage leaching step of the rare earth elements recovery process as a whole.

Note that, while not an essential aspect, before the leaching step K, it is also possible to crush the iron and steel slag to increase the surface area. Alternatively, it is also possible to quench the molten iron and steel slag with water to produce fine particulate water granulated slag with a large surface area. By increasing the surface area of the iron and steel slag, it is possible to raise the leach rates of the scandium and other rare earth elements in the iron and steel slag.

### <Leaching Step 1, K>

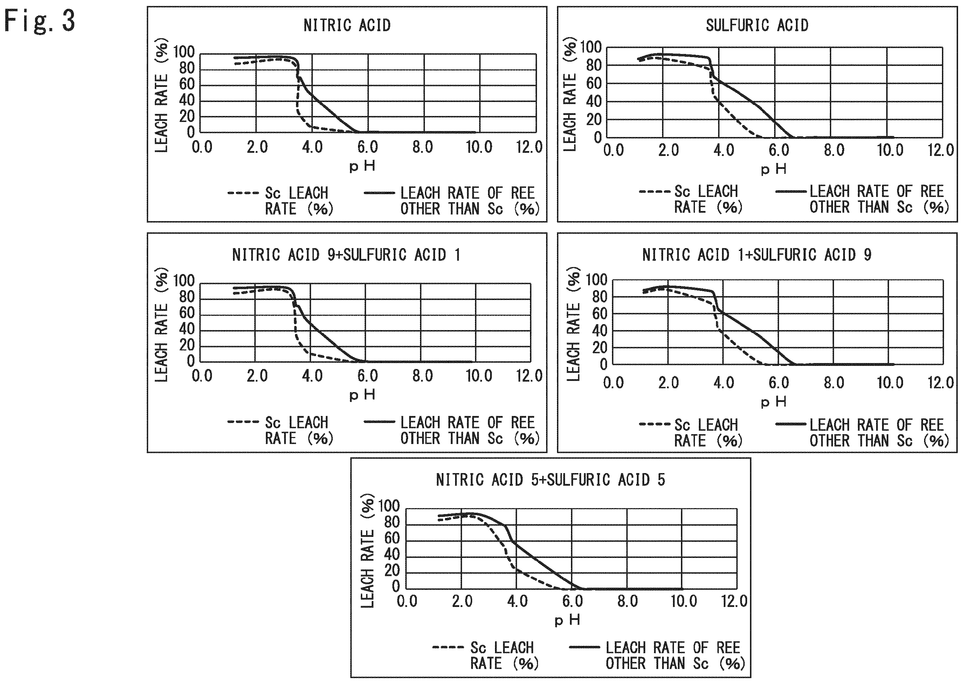

In the leaching step 1 (in FIG. 1, K), the iron and steel slag is dipped in acid to make the mainly rare earth elements other than scandium leach out into the solvent. Relatively, scandium is mainly contained in the residue. More specifically, the pH of the leaching solution obtained by bringing a first acid in contact with the iron and steel slag is adjusted to become within a first pH range to obtain a first leaching solution. The pH can be adjusted by monitoring the pH of the leaching solution obtained by bringing an acid into contact with the iron and steel slag while controlling the additional amount of addition of acid or base. As the acid, an inorganic acid and organic acid may be mentioned. An inorganic acid is preferable. As specific examples of the inorganic acid, sulfuric acid, nitric acid, and hydrochloric acid may be mentioned. From the viewpoint of the leach rate of the rare earth elements, hydrochloric acid and nitric acid are preferable. From the viewpoint of the separation ratio of the rare earth elements, typically the separation ratio of Sc and the rare earth elements other than Sc, sulfuric acid and nitric acid are preferable. FIG. 3 shows the relationship of the final pH of the leaching solution and the leach rate of the rare earth elements. The rare earth elements are plotted differentiating Sc and other than Sc. As the leaching solution, only nitric acid, only sulfuric acid, and nitric acid and sulfuric acid in three types of mixtures (nitric acid volume:sulfuric acid volume=9:1, 5:5, 1:9) are charted. Note that, Tables 1 to 5 extract the numerical data from the charts.

**[Table 1]**

| Table 1. Data on Leach Rate When Using Nitric Acid | | |
|---|---|---|
| Nitric acid (pH) | Sc leach rate (%) | Leach rate of REE other than Sc (%) |
| 9.8 | 0.15 | 0.21 |
| 6.3 | 0.19 | 0.23 |
| 6.0 | 0.33 | 0.60 |
| 5.5 | 0.29 | 3.41 |
| 4.0 | 6.91 | 47.8 |
| 3.8 | 11.8 | 54.6 |
| 3.6 | 21.7 | 69.8 |
| 3.5 | 29.8 | 70.7 |
| 3.3 | 89.3 | 94.7 |
| 1.2 | 87.9 | 95.3 |

**[Table 2]**

| Table 2. Data on Leach Rate When Using Sulfuric Acid | | |
|---|---|---|
| Sulfuric acid (pH) | Sc leach rate (%) | Leach rate of REE other than Sc (%) |
| 10.2 | 0.12 | 0.19 |
| 7.5 | 0.14 | 0.22 |
| 6.6 | 0.20 | 0.85 |
| 5.3 | 2.9 | 36.9 |
| 3.9 | 45.1 | 66.3 |
| 3.8 | 55.0 | 72.4 |
| 3.7 | 64.2 | 81.1 |
| 3.6 | 76.8 | 88.5 |
| 1.8 | 87.8 | 91.7 |
| 1.1 | 84.5 | 87.0 |

**[Table 3]**

| Table 3. Data on Leach Rate When Using Mixed Acid (Nitric Acid 9:Sulfuric Acid 1) | | |
|---|---|---|
| Nitric acid 9:Sulfuric acid 1 (pH) | Sc leach rate (%) | Leach rate of REE other than Sc (%) |
| 9.9 | 0.15 | 0.21 |
| 6.4 | 0.18 | 0.22 |
| 6.1 | 0.32 | 0.62 |
| 5.5 | 0.55 | 6.76 |
| 4.0 | 10.7 | 49.6 |
| 3.8 | 16.1 | 56.4 |
| 3.6 | 25.9 | 70.9 |
| 3.5 | 34.6 | 72.4 |
| 3.2 | 89.0 | 94.4 |
| 1.2 | 87.7 | 94.4 |

**[Table 4]**

| Table 4. Data on Leach Rate When Using Mixed Acid (Nitric Acid 5:Sulfuric Acid 5) | | |
|---|---|---|
| Nitric acid 5:Sulfuric acid 5 (PH) | Sc leach rate (%) | Leach rate of REE other than Sc (%) |
| 10.0 | 0.14 | 0.20 |
| 6.9 | 0.17 | 0.22 |
| 6.3 | 0.27 | 0.72 |
| 5.4 | 1.59 | 20.2 |
| 3.9 | 26.0 | 57.0 |
| 3.8 | 33.4 | 63.5 |
| 3.6 | 42.9 | 75.5 |
| 3.5 | 53.3 | 79.6 |
| 2.6 | 88.6 | 93.2 |
| 1.2 | 86.2 | 91.1 |

**[Table 5]**

| Table 5. Data on Leach Rate When Using Mixed Acid (Nitric Acid 1:Sulfuric Acid 9) | | |
|---|---|---|
| Nitric acid 1: Sulfuric acid 9 (PH) | Sc leach rate (%) | Leach rate of REE other than Sc (%) |
| 10.2 | 0.12 | 0.19 |
| 7.3 | 0.15 | 0.22 |
| 6.6 | 0.21 | 0.83 |
| 5.3 | 2.63 | 33.5 |
| 3.9 | 41.3 | 64.4 |
| 3.8 | 50.7 | 70.6 |
| 3.7 | 59.9 | 80.0 |
| 3.6 | 72.1 | 86.7 |
| 2.0 | 88.1 | 92.0 |
| 1.1 | 85.0 | 87.8 |

The inventors obtained the following findings based on the charts of FIG. 3 and the data of Tables 1 to 5. First, substantially similar behavior is exhibited regardless of the type of acid, that is, the difference in nitric acid, sulfuric acid, and their mixed acids. Specifically, at the range of pH of generally less than 6.7, the difference of the leach rates of Sc and rare earth elements other than Sc starts to expand while at the range of pH or generally 1.1 or more, a difference of the leach rates is observed. Furthermore, at the range of pH of 1.1 or more and less than 6.6, the difference of the leach rates of Sc and rare earth elements other than Sc is about 0.1% or more, so this is preferable. Further, at the range of pH of 3.0 or more to 5.3 or less, the difference of the leach rates is about 5.0% or more, so this is more preferable.

Based on these findings, next, by controlling the pHs of the leaching solutions, it is possible to leave at least part of the rare earth elements, for example, only Sc, among the rare earth elements similar in chemical properties, in the solid phase (residue) and leach out the other rare earth elements, for example, the rare earth elements other than Sc, in the liquid phase (solvent). The acid is preferably a strong acid from the viewpoint of obtaining a high leach rate of rare earth elements. From a similar viewpoint, the pKₐ of the acid is preferably -2 or less. One or more types of acid can be used. The concentration of the acid can be suitably selected in a range giving the desired pH and is not particularly limited. Considering availability and applicability, the acid concentration of nitric acid may be 0.1 mol/L or more and 17.1 mol/L or less while the acid concentration of sulfuric acid may be 0.1 mol/L or more and 18.7 mol/L or less.

In the present embodiment, the first acid includes nitric acid or sulfuric acid. The first pH range is 1.1 or more and less than 6.7. The first pH range may be suitably adjusted so that a desired difference in leach rates is obtained. The specific numerical values will be explained later.

The specific method for performing the leaching step 1 (K) is illustrated below. Iron and steel slag is charged into a leaching reaction container and a first acid is added. At this time, the solid-liquid ratio (mass ratio) of the iron and steel slag and acid is preferably 1:1 to 1:100. The pH of the acid added may be 1.0 or less. Iron and steel slag contains 10 to 70 mass% of oxides or hydroxides of calcium or magnesium, so the amount and pH of the acid first added should be determined anticipating that the pH will be neutralized by these. As the method of monitoring the pH, the method of immersing a pH sensor in the leaching solution obtained by bringing an acid into contact with the iron and steel slag and monitoring the pH of the leaching solution at all times may be mentioned. Further, it is preferable to suitably perform agitation etc. so that the pH of the leaching solution becomes uniform. Further, rare earth elements can be sufficiently leached out even under conditions of a leaching solution temperature of ordinary temperature of 15 to 35°C and a pressure of 1013 hpa or so, but to raise the leaching speed, it is also possible to apply heat or pressure while leaching out the rare earth elements.

When the pH of a leaching solution is higher than the final pH targeted, it is possible to monitor the pH value and add acid little by little to adjust it to the final pH. On the other hand, when the pH of a leaching solution is lower than the targeted final pH, it is possible to monitor the pH value and add iron and steel slag or a basic substance little by little to adjust it to the final pH. Note that, in the present disclosure, the "final pH of the leaching solution" is the pH at the point of time after adding the acid or base when the speed of change of the pH becomes 1/min or less. The "basic substance" is not particularly limited, but sodium hydroxide, potassium hydroxide, calcium hydroxide, magnesium hydroxide, etc. may be mentioned.

The final pH of the leaching step 1 (K) can be suitably determined in accordance with the objective. It may be selected from within a first pH range. For example, it may be selected from the range consisting of any combination of an upper limit value of less than 7.0, 6.0, 5.5, 5.0, 4.5, or 4.0 and a lower limit value of 0.0, 1.0, 1.5, 2.0, 2.5, or 3.0. From the viewpoint of separation of the scandium and other rare earth elements, the final pH may be suitably selected in according to the type of the first acid.

Further, as shown in FIG. 3, regardless of the difference in the type of the acid, that is, the nitric acid, sulfuric acid, and mixed acids of the same, scandium and other rare earth elements are substantially similar in separation behavior. For this reason, nitric acid, sulfuric acid, and mixed acids of the same may be used to make the pH range 1.1 or more and less than 6.7. In this pH range, the leach rate of the rare earth elements other than Sc differs. It is possible to leave only Sc in the solid phase (residue) and leach out the rare earth elements other than Sc to the liquid phase (solvent). Furthermore, a range of pH of 1.1 or more and less than 6.6 is preferable. This pH range enables the difference in leach rates of Sc and rare earth elements other than Sc to be made about 0.1% or more. Further, a pH of 3.0 or more and 5.3 or less in range is more preferable. This pH range enables the difference in leach rates to be made about 5.0% or more.

If using nitric acid as the first acid, the pH may be 1.2 or more and less than 6.0. In this pH range, the difference between the leach rates of Sc and of the rare earth elements other than Sc can be made around 1.0% or more. Further, pH 3.4 or more and 4.0 or less in range is more preferred. In this range, the leach rates of Sc and of the rare earth elements other than Sc can be made around 10.0% or more.

If using sulfuric acid as the first acid, the pH may be 1.1 or more and less than 6.7 in range. In this pH range, the difference between the leach rates of Sc and of the rare earth elements other than Sc can be made around 1.0% or more. Further, pH 3.6 or more and 5.3 or less in range is more preferred. In this range, the leach rates of Sc and of the rare earth elements other than Sc can be made around 10.0% or more.

If using a mixed acid (nitric acid 9:sulfuric acid 1) as the first acid, the pH may be 1.2 or more and less than 6.0. In this pH range, the difference in leach rates of Sc and rare earth elements other than Sc can be made about 1.0% or more. Further, pH 3.4 or more and 4.0 or less in range is more preferable. In this range, the leach rates of Sc and rare earth elements other than Sc can be made about 10.0% or more.

If using a mixed acid (nitric acid 5:sulfuric acid 5) as the first acid, the pH may be 1.2 or more and less than 6.3. In this pH range, the difference in leach rates of Sc and rare earth elements other than Sc can be made about 1.0% or more. Further, pH 3.4 or more and 4.0 or less in range is more preferable. In this range, the leach rates of Sc and rare earth elements other than Sc can be made about 10.0% or more.

If using a mixed acid (nitric acid 1:sulfuric acid 9) as the first acid, the pH may be 1.1 or more and less than 6.6. In this pH range, the difference in leach rates of Sc and rare earth elements other than Sc can be made about 1.0% or more. Further, pH 3.6 or more and 5.3 or less in range is more preferable. In this range, the leach rates of Sc and rare earth elements other than Sc can be made about 10.0% or more.

It is also possible to change the mixed ratio of the nitric acid and sulfuric acid in accordance with the desired extent of separation. The range of the final pH may also be limited.

In one embodiment, from the viewpoint of improvement of the leach rate of rare earth elements, in general, the final pH is preferably low and may be selected from less than 7.0, 6.7 or less, 6.5 or less, 6.0 or less, 5.5 or less, or 5.0 or less. It is possible to suitably select the final pH and make the leach rate of the rare earth elements expressed by the following (Formula 1) within a desired range. [Leach rate of rare earth elements (mass%)]=[Leached rare earth elements (µg)]÷[rare earth elements (µg) in iron and steel slag]×100 (Formula 1)

Note that, in Formula 1, the "leached rare earth elements" and the "rare earth elements in iron and steel slag" are considered minus the scandium separated at the residue if focusing only on the leaching step 1. Alternatively, if finding the leach rate including the scandium separated at the residue, the amount of leaching in the leaching step 2 and the content in the iron and steel slag explained later are considered.

### <Leaching Step 2, K2>

At the leaching step 2 (in FIG. 1, K2), the residue produced at the leaching step 1 is dipped in an acid and the rare earth elements (mainly scandium) not leached out at the leaching step 1 are leached out into the solvent. In more detail, the pH of the leaching solution obtained by brining a second acid into contact with the residue produced in the leaching step 1 is adjusted so as become within a second pH range lower than the leaching step 1 to obtain a second leaching solution. At the leaching step 2, it is possible to adjust the pH so that a second pH range lower than the first pH range at the leaching step 1 is realized so that the rare earth elements not leached out at the leaching step 1 (mainly scandium) can be leached out. The pH can be adjusted by monitoring the pH of the leaching solution obtained by bringing an acid into contact with the residue while controlling the additional amount of acid or base added. As the acid, inorganic acids and organic acids may be mentioned. Inorganic acids are preferable. As specific examples of inorganic acids, sulfuric acid, nitric acid, and hydrochloric acid may be mentioned. The acid is preferably a strong acid from the viewpoint of obtaining a high leach rate of rare earth elements. From a similar viewpoint, the pKₐ of the acid is preferably -2 or less. One or more types of acids can be used. The concentration of the acid can be suitably selected in the range giving the desired pH and is not particularly limited. Considering availability and applicability, the acid concentration of nitric acid may be 0.1 mol/L or more and 17.1 mol/L or less while the acid concentration of sulfuric acid may be 0.1 mol/L or more and 18.7 mol/L or less.

In the present embodiment, the second acid includes nitric acid or sulfuric acid. The second pH range is -1.0 or more. Further, the second pH range is a pH lower than the leaching solution at the leaching step 1, that is, is less than the final pH of the leaching solution at the leaching step 1. The second pH range may be suitably adjusted so that a desired leach rate is obtained. The specific numerical values will be explained later.

The specific method of performing the leaching step 2(K2) is illustrated below. The residue produced in leaching step 1 is charged into a leaching reaction container and a second acid is added. At this time, the solid-liquid ratio (mass ratio) of the residue and acid is preferably 1:1 to 1:100. The pH of the acid added may be 1.0 or less. The residue sometimes contains the oxides or hydroxides of calcium or magnesium which were contained in the iron and steel slag. The amount and pH of the acid first added should be determined anticipating that the pH will be neutralized by these. As the method of monitoring the pH, the method of immersing a pH sensor in the leaching solution obtained by bringing an acid into contact with the iron and steel slag and monitoring the pH of the leaching solution at all times may be mentioned. Further, it is preferable to suitably perform agitation etc. so that the pH of the leaching solution becomes uniform. Further, rare earth elements can be sufficiently leached out even under conditions of a leaching solution temperature of ordinary temperature of 15 to 35°C and a pressure of 1013 hpa or so, but to raise the leaching speed, it is also possible to apply heat or pressure while leaching out the rare earth elements.

When the pH of the leaching solution is higher than the final pH targeted, it is possible to monitor the pH value and add acid little by little to adjust it to the final pH. On the other hand, when the pH of the leaching solution is lower than the targeted final pH, it is possible to monitor the pH value and add iron and steel slag or a basic substance little by little to adjust it to the final pH. Note that, in the present disclosure, the "final pH of the leaching solution" is the pH at the point of time after adding the acid or base when the speed of change of the pH becomes 1/min or less. The "basic substance" is not particularly limited, but sodium hydroxide, potassium hydroxide, calcium hydroxide, magnesium hydroxide, etc. may be mentioned.

The final pH of the leaching step 2 (K2) can be suitably determined in accordance with the objective. It may be selected from the range consisting of any combination of an upper limit value of less than 7.0, 6.0, 5.5, 5.0, 4.5, or 4.0 and a lower limit value of -1.0, -0.5, 0.0, 1.0, 1.5, 2.0, 2.5, or 3.0.

In one embodiment, from the viewpoint of improvement of the leach rate of the rare earth elements, generally the lower the final pH, the more preferable. It may be selected from less than 7.0, 6.7 or less, 6.5 or less, 6.0 or less, 5.5 or less, or 5.0 or less. The leach rate of scandium at the leaching step 2 can be found by the following (Formula 1'). [Leach rate of scandium (mass%)]=[Leached scandium (µg)]÷[scandium in residue produced at leaching step 1 (µg)]×100 (Formula 1')

### <Solid-Liquid Separation Steps L, L'>

The solid-liquid separation steps L, L' are the steps of separating solids (residue) from the first leaching solution and the second leaching solution obtained at the leaching steps K, K2. At the solid-liquid separation steps L, L', it is possible to physically separate the respective leaching solutions and leach residues obtained at the leaching steps K, K2. As the separation method, a continuous thickener, deep cone thickener, lamella thickener, drum filter, disk filter, horizontal belt filter, filter press, pressure filter device, centrifuge, or other known solid-liquid separation device may be used.

The first leaching solution and the second leaching solution obtained by the leaching steps K, K2 and solid-liquid separation steps L, L' may be subjected to optional refining steps to raise more the purities of the elements contained in the respective leaching solutions (typically, the rare earth elements other than scandium or the scandium). As the optional refining steps, pH adjustment steps, extraction steps M, M', precipitation steps N, N', roasting steps O, O', etc. may be mentioned. Below, illustrative methods of the different steps will be described. Note that, unless particularly indicated otherwise, at each refining step, "first" means the result of treatment of the first leaching solution while "second" means the result of treatment of the second leaching solution.

### <pH Adjustment Steps>

While not an essential aspect, a base or acid may be added to the first leaching solution and the second leaching solution after the leaching steps K, K2 or solid-liquid separation steps L, L' to adjust the pHs and obtain the respective pH-adjusted leaching solutions. By making the pHs of the leaching solutions 0.5 to 8, the adsorption rates of the rare earth elements in the solid phases in the later explained solid phase extraction steps M1, M1' are improved and calcium, magnesium, and other main constituents of the iron and steel slag can be separated.

### <Extraction Steps M, M'>

The extraction steps M, M' are for example respectively steps for extracting the rare earth elements from the leaching solutions after the solid-liquid separation steps L, L' to obtain element-enriched solutions (typically, solutions in which rare earth elements other than scandium are enriched or scandium-enriched solutions). The extraction steps M, M' respectively preferably include one or both of the solid phase extraction steps M1, M1' for concentrating rare earth elements by the principle of solid phase extraction and the solvent extraction steps M2, M2' for concentrating rare earth elements by the principle of solvent extraction. If using both of the solid phase extraction steps M1, M1' and solvent extraction steps M2, M2', either may be before the other in the order of treatment of the leaching solutions containing the rare earth elements after the solid-liquid separation steps. At the extraction steps M, M', if using only one of the solid phase extraction steps M1, M1' and solvent extraction steps M2, M2', there are the advantages that the facilities can be simplified and rare earth elements can be recovered at low cost, but the purity of the obtained rare earth elements becomes lower than the case of use of both of the solid phase extraction steps M1, M1' and solvent extraction steps M2, M2'. On the other hand, if using both of the solid phase extraction steps M1, M1' and solvent extraction steps M2, M2' to recover rare earth elements, there is the advantage that the rare earth elements can be recovered with a high purity, but compared with the case of using only one of the solid phase extraction steps M1, M1' and solvent extraction steps M2, M2', the facilities become larger and the costs of the facilities become higher. The above merits and demerits should be weighed and the steps selectively applied in accordance with the objective. For example, if utilizing rare earth elements for applications like a mischmetal where some inclusion of impurities does not become a problem, single extraction steps are sufficient. On the other hand, if for use in the electronics industry etc. and other applications where purity of the product is particularly important, extraction steps combining the solid phase extraction steps M1, M1' and solvent extraction steps M2, M2' are preferable.

### <Solid Phase Extraction Steps M1, M1'>

The solid phase extraction steps M1, M1' are steps respectively included in the extraction steps M, M'. For example, they are respectively steps including rare earth elements adsorption steps M11, N11', cation removal steps M12, M12', and rare earth element elution steps M13, M13'. In accordance with need, in the solid phase extraction steps M1, M1', respective solid phase washing steps M14, M14' may be performed. In the rare earth element adsorption steps M11, M11', for example, the leaching solutions may be brought into contact with solid phases comprised of a resin having iminodiacetic acid as functional groups or other solid phase extraction agent to make the cations be adsorbed at the solid phases and obtain cation-adsorbed solid phases. Next, at the cation removal steps M12, M12', for example, a less than 0.3N inorganic acid may be brought into contact with the cation-adsorbed solid phases to make cations other than the rare earth elements be eluted from the solid phases and obtain rare earth element-adsorbed solid phases. At the rare earth element elution steps M13, M13', for example, a 0.3N or more and less than 3N inorganic acid may be brought into contact with the rare earth element-adsorbed solid phases to elute the rare earth elements and obtain rare earth element solid phase eluents. At the solid phase washing steps M14, M14', for example a 3N or more inorganic acid may be brought into contact with the solid phases obtained from the rare earth element elution steps M13, M13' to elute the impurity cations. Note that, at M1', in principle, only the scandium contained in the residue produced at the leaching step 1 is covered, so it is possible to keep down the amount of consumption of the solid phase extraction agent, cation-adsorbed solid phase, inorganic acids, etc. used, therefore this is preferable.

While not an essential aspect, the solid phases obtained after the solid phase washing steps M14, M14' may respectively be again utilized as the solid phases of the rare earth element adsorption steps M11, M11'. Since the solid phases are repeatedly used, it is possible to slash the amount of consumption of the resin having iminodiacetic acid as functional groups. This is advantageous economy wise. However, if repeatedly using the same solid phases, the resin having iminodiacetic acid as functional groups will deteriorate causing the performance to drop and the ability to separate impurities and the rare earth elements to fall. In this case, the performance can be returned to its original state by replacing the resin with new resin having iminodiacetic acid as functional groups.

### <Solvent Extraction Steps M2, M2'>

The solvent extraction steps M2, M2' are respectively steps included in the extraction steps M, M' and, for example, are steps including for example extraction steps M21, M21' and back extraction steps M22, M22'. In the extraction steps M21, M21', for example, an organic solvent including a solvent extraction agent and the leaching solutions may be mixed to make the rare earth elements move to the organic solvent and obtain organic phases containing the rare earth elements. In the back extraction steps M22, M22', respectively, for example, the organic phases containing the rare earth elements obtained at the extraction steps M21, M21' may be mixed with water to make the rare earth elements move from the organic phases to the aqueous phases for back extraction. In the back extraction steps M22, M22', if necessary, the pH may be adjusted. The pH may be made a pH suitable for the organic solvent used etc.

When mixing the organic phases and aqueous phases in the extraction steps M21, M21' and back extraction steps M22, M22', a centrifugal extractor or pulse column or other known solvent extraction device may be used.

As the solvent extraction agent used at the extraction steps M21, M21', a known one can be used. For example, neodecanoic acid or other carboxylic acid-based extraction agent, di(2-ethylhexy)phosphoric acid or tributyl phosphate, tetrabutylmethylene diphosphonate, trioctyl phosphine oxide, or other organophosphoric acid-based extraction agent, or triisooctylamine or other amine-based extraction agent may be mentioned. The solvent extraction agent can also be used without a solvent. It can also be used in kerosine, xylene, toluene, or other organic solvent not mixed with water. The solvent extraction agent may also be added to the aqueous phase.

### <Precipitation Steps N, N'>

The precipitation steps N, N' are respectively for example steps for adding a precipitation agent to the element-enriched solutions obtained through the extraction steps M, M' to obtain the precipitates containing the elements concerned. As precipitation agents, a base and acid may be mentioned. As a base, sodium hydroxide, potassium hydroxide, or another metal containing a basic salt and tetramethylammonium hydroxide (TMAOH) or other organic base may be mentioned, but from the viewpoint of obtaining the element concerned at a higher purity, an organic base is preferable. As the acid, tartaric acid, carboxylic acid, oxalic acid, etc. may be mentioned. Oxalic acid is preferable.

In the precipitation steps N, N', if using oxalic acid for the precipitation agent, there is the advantage that it is possible to separate with a high efficiency the impurities such as uranium, aluminum, and iron contained in the element-enriched solution and the rare earth elements, but there is the demerit that the ability to separate magnesium and calcium and the rare earth elements is low. On the other hand, if using a base for the precipitation agent, there is the advantage that it is possible to separate with a high efficiency the impurities such as uranium, magnesium and calcium contained in the element-enriched solution and the rare earth elements, but there is the demerit that the ability to separate iron and aluminum and the rare earth elements is low. The impurities contained in the element-enriched solution change depending on the constituents of the iron and steel slag. Further, the impurity elements which become a problem differ depending on the elements to be precipitated. Therefore, the precipitation agent should be selectively used according to the objective.

The obtained precipitate and the solution after precipitation can be physically separated. As the method of separation, a continuous thickener, deep cone thickener, lamella thickener, drum filter, disk filter, horizontal belt filter, filter press, pressure filter device, centrifuge, or other known solid-liquid separation device may be used.

### <Roasting Steps O, O'>

The roasting steps O, O' are, respectively, for example steps for roasting the precipitates obtained at the precipitation steps N, N' to obtain oxides of the elements covered. The roasting steps O, O' may respectively include the washing steps O1, O1' and heating steps O2, O2'. At the washing steps O1, O1', respectively the precipitates obtained at for example the precipitation steps N, N' are washed by water to remove the impurities. In the heating steps O2, O2', respectively the precipitates after the washing steps O1, O1' are heated to remove the moisture. Furthermore, the carbon, phosphorous, nitrogen, and other volatile elements are vaporized to remove them and are made to react with oxygen to obtain oxides of the elements covered.

In the roasting steps O, O', the conditions of the roasting are not limited, but for example the slag may be placed in a tube furnace and heated at about 900°C for 2 hours or so. Alternatively, a rotary kiln or other continuous furnace can be used to industrially produce oxides at a high efficiency since it is possible to perform the drying and roasting in the same apparatus.

### EXAMPLES

Below, examples will be used to explain the present invention in further detail, but the present invention is not limited to these descriptions in any way.

### (Example 1)

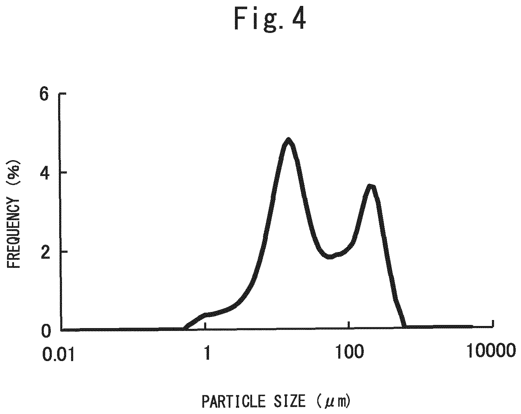

The iron and steel slag which was 1 cm³ to 4 cm³ or so in particle size before the leaching steps was crushed by a ball mill to raise the surface area. An example of the distribution of particle sizes of the iron and steel slag is shown in FIG. 4 (particle size 0.5 µm or more and 500 µm or less). Further, the element composition found by measuring the iron and steel slag used for the experiments by fluorescent X-ray analysis is shown as an example in Table 6. Note that, in this example, among iron and steel slag, blast furnace slag was covered.

**[Table 6]**

| Table 6. Composition of Iron and steel slag (mass%) | | | | |
|---|---|---|---|---|
| CaO | SiO2 | Al₂O₃ | MgO | T-Fe |
| 42.2 | 35.2 | 16.8 | 5.6 | 0.2 |

Next, as the leaching step 1, assuming the solid-liquid mass ratio to be 1 to 100, the iron and steel slag and acid (nitric acid or sulfuric acid) were brought into contact to leach out the rare earth elements in the iron and steel slag. During the leaching, the pH of the leaching solution was monitored to become 1.1 to 10.2 in range. If a pH higher than the target pH (in other words, the final pH of the leaching step 1), an acid was added, while if a pH lower than the target pH, a base was added.

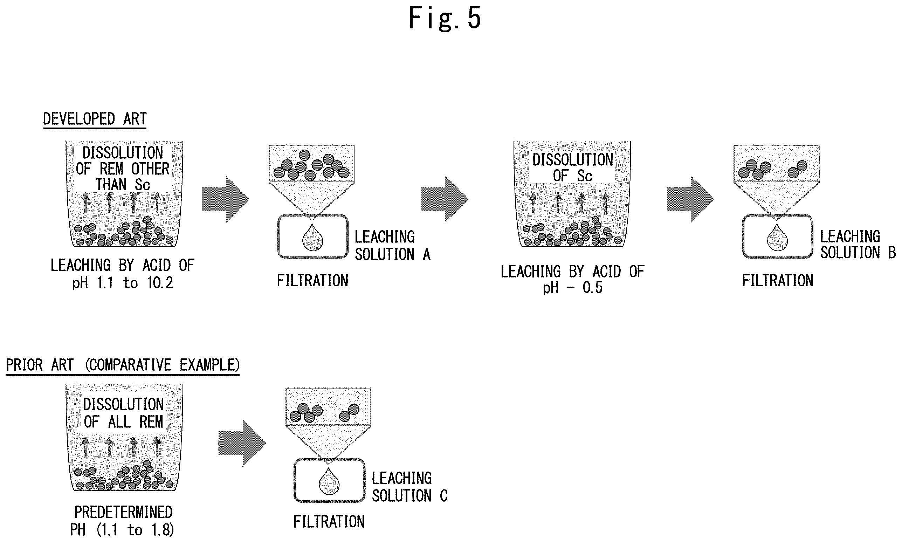

If explained while referring to FIG. 5 schematically showing the leaching steps of the examples and comparative examples, at the leaching step 1, a liquid phase in which rare earth elements other than Sc (that is, Y, La, Ce, Pr, Nd, Sm, Eu, Gd, Tb, Dy, Ho, Er, Tm, Yb, and Lu) were mainly leached out into was produced. Furthermore, these were separated by filtration to separate them from the liquid phase and recover a solid phase mainly containing Sc. The filtrate obtained at the leaching step 1 was made the leaching solution A (FIG. 5).

Next, as the leaching step 2, the solid phase recovered at the leaching step 1 was brought into contact with nitric acid or sulfuric acid to leach out the Sc in the solid phase. (In the same way as the leaching step 1), during the leaching, the pH of the leaching solution was monitored. If it was a pH higher than the target pH (in other words, the final pH of the leaching step 2), an acid was added, while if it was a pH lower than the target pH, a base was added. Here, the target pH was made -0.5.

If explained while referring to FIG. 5, at the leaching step 2, a liquid phase in which Sc was mainly leached out to was produced and was filtered to separate the solid phase from it. The filtrate obtained at the leaching step 2 was made the leaching solution B (FIG. 5).

Further, as a comparative example, rare earth elements were extracted by only the prior art of a single stage leaching step. Specifically, the filtrate obtained by leaching making the target pH (final pH) of the above leaching step 1 a predetermined value (see Table 8) and separating it by filtration was made the leaching solution C (FIG. 5).

Note that, the other conditions of the leaching step were a leaching time of 24 hours, room temperature of 25°C, and air pressure of 1013 hpa. Further, the invention examples are not limited by these leaching time, temperature, pressure, the mass of the iron and steel slag, or the amounts of addition of the acids and bases. In particular, it was discovered by separate experiments that the reaction between blast furnace slag and an acid ends in several minutes.

The obtained leaching solutions A, B, and C were respectively supplied to an inductively coupled mass spectrometer for elemental analysis. Further, the total amount of rare earth elements in the iron and steel slag (total REE) was found by completely dissolving the iron and steel slag by the acid decomposition method and melting method and measuring the sample by the above described inductively coupled mass spectrometer. The results are shown in Table 7. Note that, the data of Table 7 is obtained for the slag used for obtaining the data in Tables 1 and 2 with test conditions the same as the conditions of Tables 1 and 2. For this reason, the numerical values of Table 7 and Tables 1 and 2 generally match, though there are slight differences.

**[Table 7]**

| | Leaching step 1 | | | | | | Leaching step 2 | | | | | |
|---|---|---|---|---|---|---|---|---|---|---|---|---|
| Test no. | Type of acid | Target pH | pH adjusting time, sec | Sc separation ratio 1 | Sc leach rate_1, % | Other leach rate_1, % | Type of acid | Target pH | pH adjusting time, sec | Sc separation ratio 2 | Sc leach rate_2, % | Other leach rate_2, % |
| No. 1 | Sulfuric acid | 10.2 | 3 | 0.039 | 0.12 | 0.20 | Sulfuric acid | -0.5 | 107 | 0.060 | 99.9 | 99.8 |
| No. 2 | | 7.5 | 30 | 0.041 | 0.14 | 0.20 | | -0.5 | 80 | 0.060 | 99.9 | 99.8 |
| No. 3 | | 6.7 | 38 | 0.015 | 0.20 | 0.80 | | -0.5 | 72 | 0.060 | 99.8 | 99.2 |
| No. 4 | | 5.3 | 52 | 0.005 | 2.9 | 34.9 | | -0.5 | 58 | 0.089 | 97.1 | 65.1 |
| No. 5 | | 3.9 | 66 | 0.041 | 45.1 | 65.0 | | -0.5 | 44 | 0.094 | 54.9 | 35.0 |
| No. 6 | | 3.8 | 67 | 0.046 | 55.0 | 71.4 | | -0.5 | 43 | 0.094 | 45.0 | 28.6 |
| No. 7 | | 3.7 | 68 | 0.048 | 64.2 | 80.1 | | -0.5 | 42 | 0.108 | 35.8 | 19.9 |
| No. 8 | | 3.6 | 69 | 0.052 | 76.8 | 87.8 | | -0.5 | 41 | 0.113 | 23.2 | 12.2 |
| No. 9 | | 1.8 | 87 | 0.058 | 87.8 | 91.4 | | -0.5 | 23 | 0.070 | 12.2 | 8.6 |
| No. 10 | | 1.1 | 94 | 0.058 | 84.5 | 86.9 | | -0.5 | 16 | 0.070 | 15.5 | 13.1 |
| No. 13 | Nitric acid | 9.8 | 7 | 0.043 | 0.15 | 0.20 | Nitric acid | -0.5 | 103 | 0.060 | 99.8 | 99.8 |
| No. 14 | | 6.3 | 42 | 0.050 | 0.19 | 0.20 | | -0.5 | 68 | 0.060 | 99.8 | 99.8 |
| No. 15 | | 6.0 | 45 | 0.034 | 0.33 | 0.60 | | -0.5 | 65 | 0.060 | 99.7 | 99.4 |
| No. 16 | | 5.5 | 50 | 0.005 | 0.29 | 3.20 | | -0.5 | 60 | 0.062 | 99.7 | 96.8 |
| No. 17 | | 4.0 | 65 | 0.009 | 6.91 | 45.3 | | -0.5 | 45 | 0.102 | 93.1 | 54.7 |
| No. 18 | | 3.8 | 67 | 0.014 | 11.8 | 52.1 | | -0.5 | 43 | 0.110 | 88.2 | 47.9 |
| No. 19 | | 3.6 | 69 | 0.019 | 21.7 | 66.9 | | -0.5 | 41 | 0.141 | 78.3 | 33.1 |
| No. 20 | | 3.4 | 71 | 0.026 | 29.8 | 68.2 | | -0.5 | 39 | 0.132 | 70.2 | 31.8 |
| No. 21 | | 3.3 | 72 | 0.056 | 89.3 | 97.2 | | -0.5 | 38 | 0.114 | 10.7 | 2.8 |
| No. 22 | | 1.2 | 93 | 0.055 | 87.9 | 94.8 | | -0.5 | 17 | 0.139 | 12.1 | 5.2 |

| | | | | | | | | | | | | |
|---|---|---|---|---|---|---|---|---|---|---|---|---|
| Sc leach rate=(Sc mass in leaching solution)/(Sc mass in slag) Other leach rate=(other mass in leaching solution)/(other mass in slag), where "other" indicates REE other than Sc Sc separation ratio=(Sc mass in leaching solution)/(total REE mass in leaching solution) *1: "Sc leach rate" indicates the mass ratio of the mass of Sc leached out to the leaching solution in each leaching step (leaching solution A or leaching solution B) with respect to the mass of Sc contained in the original slag sample. *2: "Other leach rate" indicates the mass ratio of the mass of other rare earth elements (rare earth elements other than Sc) leached out to the leaching solution in each leaching step 2 (leaching solution A or leaching solution B) with respect to the mass of all other rare earth elements (rare earth elements other than Sc) contained in the original slag sample. *3: "Sc separation ratio" indicates the mass ratio of the mass of Sc leached out to the leaching solution at each leaching step (leaching solution A or leaching solution B) with respect to the mass of all REE leached out to the leaching solution in each leaching step (leaching solution A, or leaching solution B) | | | | | | | | | | | | |

From Table 7, it will be understood that separation of Sc is promoted by performing the leaching step 2 as well rather than just the leaching step 1.

Specifically, the Sc separation ratio (Sc mass concentration in leaching solution A/mass concentration of all rare earths) at the time of end of the leaching step 1 is 0.005 to 0.058 in the case of sulfuric acid and 0.005 to 0.056 in the case of nitric acid. As opposed to this, even if then performing the leaching step 2, if using either of sulfuric acid and nitric acid, the above Sc separation ratio (Sc mass concentration in leaching solution B/mass concentration of all rare earths) becomes 0.060 or more, the maximum Sc separation ratio in the case of sulfuric acid becomes 0.113, and the maximum Sc separation ratio in the case of nitric acid becomes 0.141.

In particular, in the case of sulfuric acid, if the pH at the leaching step 1 is made 3.6 or more and less than 6.7, an Sc separation ratio at the leaching step 2 of more than 0.06 is obtained, the leach rate of Sc is 20 mass% or more, and the leach rate of rare earth elements other than Sc of 10 mass% or more is obtained. Furthermore, if the pH at the leaching step 1 is made 3.6 or more and 5.3 or less, the Sc separation ratio at the leaching step 2 becomes 0.089 or more.

Further, in the case of nitric acid, if the pH at the leaching step 1 is made 3.4 or more and less than 6.0, an Sc separation ratio at the leaching step 2 of more than 0.06 is obtained, the leach rate of Sc is 70 mass% or more, and the leach rate of rare earth elements other than Sc of 30 mass% or more is obtained. Furthermore, if the pH at the leaching step 1 is made 3.4 or more and 4.0 or less, the Sc separation ratio at the leaching step 2 becomes 0.102 or more.

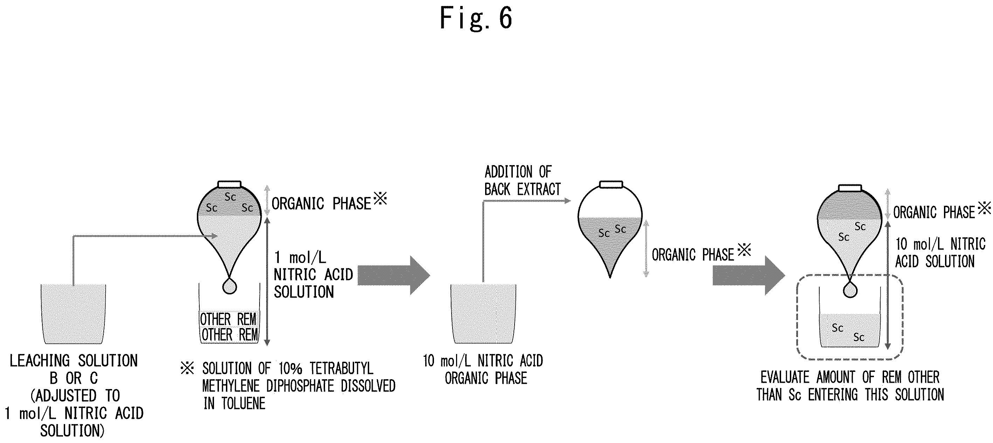

To confirm improvement of the effect of enabling separation of scandium and other rare earth elements by the invention examples, the inventors verified the effect using the leaching solution B and the leaching solution C. Specifically, they recovered the Sc containing phase from the leaching solution B and the leaching solution C by solvent extraction and confirmed to what level rare earth elements other than Sc are contained. The procedure of the typical method of confirmation is schematically shown in FIG. 6.

The leaching solution B and the leaching solution C were adjusted to nitric acid solutions with nitric acid concentrations of 1 mol/L, then an organic solvent comprised of 10 mass% of tetrabutylmethylene diphosphate dissolved in toluene was added for solvent extraction to separate the aqueous phase and organic phase. Due to this, the Sc which had been contained in the leaching solutions B, C is separated by extraction at the organic phase. The rare earth elements other than Sc are generally separated by extraction at the aqueous phase, but part is separated by extraction at the organic phase.

· Next, 10 mol/L of nitric acid is added to this organic phase (typically a phase mainly containing Sc and also containing a bit of rare earth elements other than Sc) for back extraction of Sc from the organic phase.

· The back extracted solvent is separated into an aqueous phase and organic phase. This back extracted aqueous phase contains Sc and rare earth elements other than Sc. The back extracted aqueous phase is recovered and all rare earth elements, including Sc, were quantified. To evaluate to what extent the Sc and rare earth elements other than Sc could be separated, the Sc refining rate defined by Formula 2 was calculated. The results of calculation are shown in Table 8. [Sc refining rate]=[mass of Sc in aqueous phase back extracted]÷[mass of rare earth elements in aqueous phase back extracted] (Formula 2)

**[Table 8]**

| Table 8. Comparison of Sc Refining Rates | | | | |
|---|---|---|---|---|
| Test no. | Type of acid | Leaching solution | pH at leaching step 1 | Sc refining rate |
| No. 23 | Sulfuric acid | B | 10.2 | 0.646 |
| No. 24 | | B | 7.5 | 0.646 |
| No. 25 | | B | 6.7 | 0.646 |
| No. 26 | | B | 5.3 | 0.712 |
| No. 27 | | B | 3.9 | 0.722 |
| No. 28 | | B | 3.8 | 0.718 |
| No. 29 | | B | 3.7 | 0.712 |
| No. 30 | | B | 3.6 | 0.705 |
| No. 31 | | C (1 stage) | 1.8 | 0.562 |
| No. 32 | | C (1 stage) | 1.1 | 0.610 |
| No. 33 | Nitric acid | B | 9.8 | 0.646 |
| No. 34 | | B | 6.3 | 0.646 |
| No. 35 | | B | 6.0 | 0.645 |
| No. 36 | | B | 5.5 | 0.648 |
| No. 37 | | B | 4.0 | 0.743 |
| No. 38 | | B | 3.8 | 0.759 |
| No. 39 | | B | 3.6 | 0.772 |
| No. 40 | | B | 3.4 | 0.792 |
| No. 41 | | B | 3.3 | 0.580 |
| No. 42 | | C (1 stage) | 1.2 | 0.620 |

As clear from Table 8, at the leaching solution B, at the leaching step 1 and the leaching step 2, it is possible to lower the amounts of intermixture of rare earth elements other than Sc by roughly separating the Sc and other rare elements. It became clear that it is possible to improve the Sc refining rate compared with the leaching solution C of the comparative examples.

Note that, the leaching solution A employed at the leaching step 1 contains relatively large amounts of rare earth elements other than Sc, that is, Y, La, Ce, Pr, Nd, Sm, Eu, Gd, Tb, Dy, Ho, Er, Tm, Yb, and Lu, compared with Sc (Pm is omitted since the amount which is stably present in the natural world is very slight), so it is possible to prepare a recovery solution containing rare earth elements other than Sc by known rare earth element refining technology, for example, solid phase extraction using iminodiacetic acid or solvent extraction using di-2-ethylhexyllinic acid. Similarly, the leaching solution B employed at the leaching step 2 contains relatively large amounts of Sc, so it was confirmed that it is possible to prepare a recovery solution containing Sc by solvent extraction using known rare earth element refining technology.

Furthermore, the recovery solution containing a relatively large amount of rare earth elements other than Sc and the recovery solution containing a relative large amount of Sc were back extracted and the back extraction solutions were recovered in the same way as a known precipitation step by adding a precipitation agent and filtering the precipitate to thereby recover the rare earth elements other than Sc and the Sc. In the examples and comparative examples, oxalic acid was used as the precipitation agent, but a basic reagent may also be used and precipitation caused as a hydroxide.

It was confirmed that by roasting and removing the moisture from the precipitates after washing, oxides of rare earth elements other than Sc and Sc oxides can be obtained.

### REFERENCE SIGNS LIST

K. leaching step 1
K2. leaching step 2
L, L'. solid-liquid separation steps
M, M'. extraction steps
M1, M1'. solid phase extraction steps
M2, M2'. solvent extraction steps
N, N'. precipitation steps
O, O'. solid-liquid separation steps
P, P'. roasting steps
P1, P1'. washing steps
P2, P2'. heating step
M11, M11'. rare earth element adsorption steps
M12, M12'. cation removal steps
M13, M13'. rare earth element elution steps
M14, M14'. solid phase washing steps

## Claims

1. A method of recovery of scandium (Sc) from iron and steel slag produced by an ironmaking process, the method of recovery of scandium including
a leaching step 1 of adjusting a pH of a leaching solution obtained by bringing a first acid into contact with the iron and steel slag to within a first pH range to obtain a first leaching solution,
a first solid-liquid separation step of separating solids from the first leaching solution, and
a leaching step 2 of adjusting a pH of a leaching solution obtained by bringing a second acid into contact with the solids separated by the first solid-liquid separation step to become within a second pH range lower than the leaching step 1 to obtain a second leaching solution,
where the first acid and the second acid include nitric acid or sulfuric acid, the first pH range is 1.1 or more and less than 6.7, and the second pH range is -1.0 or more.

2. The method of recovery of scandium according to claim 1, further comprising monitoring the pH of the first leaching solution and/or the second leaching solution while adding an acid or base to adjust the pH at the leaching step 1 and/or the leaching step 2.

3. The method of recovery of scandium according to claim 1, wherein the second pH range in the leaching step 2 is -0.5 or more to 3.3 or less.

4. The method of recovery of scandium according to claim 1, using sulfuric acid as the first acid.

5. The method of recovery of scandium according to claim 4, wherein the final pH of the leaching step 1 is 3.6 or more to less than 6.7.

6. The method of recovery of scandium according to claim 4, wherein the final pH of the leaching step 1 is 3.6 or more to 5.3 or less.

7. The method of recovery of scandium according to claim 1, using nitric acid as the first acid.

8. The method of recovery of scandium according to claim 7, wherein the final pH of the leaching step 1 is 3.4 or more to less than 6.0.

9. The method of recovery of scandium according to claim 7, wherein the final pH of the leaching step 1 is 3.4 or more to 4.0 or less.

10. The method of recovery of scandium according to claim 1, further comprising
a step of respectively adding a base or acid to the first leaching solution and/or the second leaching solution to adjust the pH and obtain a first pH-adjusted leaching solution and/or a second pH-adjusted leaching solution and
an extraction step of processing the first pH-adjusted leaching solution and/or the second pH-adjusted leaching solution respectively by one or both of solvent extraction and solid phase extraction to obtain first element-enriched solution and/or second element-enriched solution.

11. The method of recovery of scandium according to claim 10, further comprising a precipitation step of respectively adding a precipitation agent to the first element-enriched solution and/or the second element-enriched solution to obtain a first precipitate and/or second precipitate.

12. The method of recovery of scandium according to claim 11, further comprising a roasting step of respectively roasting the first precipitate and/or the second precipitate to obtain a first oxide and/or second oxide.

13. The method of recovery of scandium according to claim 12, further comprising a drying step of respectively drying the first precipitate and/or the second precipitate.

14. The method of recovery of scandium according to claim 10, where the solvent extraction agent used in the extraction step is any of an amine, organic phosphoric acid, and carboxylic acid.

15. The method of recovery of scandium according to claim 10, where the solid phase extraction agent used in the extraction step is a resin having iminodiacetic acid as a functional group.

16. The method of recovery of scandium according to claim 11, where the precipitation agent used in the precipitation step is any of oxalic acid, carboxylic acid, tartaric acid, and a base.

17. The method of recovery of scandium according to claim 1, where the iron and steel slag is blast furnace slag.

18. The method of recovery of scandium according to claim 1, where the second leaching solution has scandium enriched more than the rare earth elements other than scandium.
